Europäisches Patentamt

European Patent Office

Office européen des brevets

(11) Veröffentlichungsnummer: **0 406 733 A2**

## EUROPÄISCHE PATENTANMELDUNG

(21) Anmeldenummer: 90112516.1

(22) Anmeldetag: 30.06.90

(51) Int. Cl.⁵: **C02F 1/28**, C02F 1/52, C02F 1/58, C02F 3/00, C02F 11/00

(30) Priorität: 04.07.89 DE 3921924

(43) Veröffentlichungstag der Anmeldung: 09.01.91 Patentblatt 91/02

(84) Benannte Vertragsstaaten: AT BE CH DE LI NL SE

(71) Anmelder: Linde Aktiengesellschaft
Abraham-Lincoln-Strasse 21
D-6200 Wiesbaden(DE)

(72) Erfinder: Lassmann, Eberhard, Dr. Dipl. Chem.
Weiherwiese 21
D-8196 Eurasburg(DE)
Erfinder: Morper, Manfred, Dr. Dipl. Chem.
Alpspitzstrasse 28b
D-8130 Starnberg(DE)

(74) Vertreter: Schaefer, Gerhard, Dr.
Linde Aktiengesellschaft Zentrale
Patentabteilung
D-8023 Höllriegelskreuth(DE)

(54) Verfahren zur Entfernung von halogenierten organischen Verbindungen aus Abwasser.

(57) Die Erfindung betrifft ein Verfahren zur Entfernung von halogenierten organischen Verbindungen aus Abwasser. Das Abwasser wird mit Klärschlamm in Kontakt gebracht, der mit lipophilen Stoffen, z. B. Fetten oder Ölen, versetzt ist. Durch den Zusatz der lipophilen Stoffe erhält man ein Adsorbens mit sehr guten Adsorptionseigenschaften hinsichtlich der halogenierten organischen Verbindungen. Der mit den halogenierten organischen Verbindungen beladene Klärschlamm wird schließlich vom gereinigten Abwasser abgetrennt und verbrannt bzw. deponiert. (Fig.)

EP 0 406 733 A2

# VERFAHREN ZUR ENTFERNUNG VON HALOGENIERTEN ORGANISCHEN VERBINDUNGEN AUS ABWASSER

Die Erfindung betrifft ein Verfahren zur Entfernung von halogenierten organischen Verbindungen aus Abwasser.

Industrieabwässer enthalten vielfach halogenierte organische Verbindungen, die bestimmten industriellen Verarbeitungsschritten entstammen. Beispielsweise setzt die metallverarbeitende Industrie Chlorkohlenwasserstoffe zum Metall- und Oberflächenreinigen sowie zum Entfetten ein. Die chemische Industrie verwendet oft Chlorkohlenwasserstoffe als Extraktions- und Lösemittel. Außerdem werden halogenierte Kohlenwasserstoffe z.B. bei der Textilreinigung benutzt. Da halogenierte organische Verbindungen teilweise in Verdacht stehen, krebserregend zu sein, bemüht man sich, die halogenierten organischen Verbindungen aus dem Abwasser zu entfernen. Hierzu werden zur Zeit drei verschiedene Verfahren angewendet: Adsorption an Aktivkohle oder Adsorberharz, Extraktion mit Lösungsmitteln und biologischer Abbau. Die Adsorption an Aktivkohle ist mit sehr hohen Kosten verbunden, da die Aktivkohle in den meisten Fallen nicht regenerierbar ist. Dies gilt in erhöhtem Maße auch für die Adsorption an Adsorberharzen. Für Aktivkohle müssen Kosten von ca. DM 5000, -- /t und für Adsorberharz von ca. DM 30.000,-- /t angesetzt werden. Die Extraktion mit Lösungsmitteln erfordert einen hohen apparativen Aufwand für die Extraktion und Destillation. Der biologische Abbau erfordert große Reaktionszeiten von ca. 4 bis ca. 40 Stunden und ist grundsätzlich störanfällig.

Der vorliegenden Erfindung liegt die Aufgabe zugrunde, ein Verfahren zur Entfernung von halogenierten organischen Verbindungen aus Abwasser bereitzustellen, das wirtschaftlich ist und mit kleinen Behandlungszeiten auskommt.

Diese Aufgabe wird erfindungsgemäß dadurch gelöst, daß das Abwasser mit Klärschlamm in Kontakt gebracht wird, der mit mindestens einem lipophilen Stoff versetzt ist, und anschließend der Klärschlamm vom gereinigten Abwasser abgetrennt wird.

Als Klärschlamm wird vorzugsweise aerob stabilisierter Überschußschlamm und/oder Faulschlamm aus einer Kläranlage verwendet. Dem Klärschlamm werden in einer besonders vorteilhaften Ausführungsform der Erfindung pflanzliche und/oder tierische Fette bzw. Öle als lipophile Stoffe zugesetzt. In einer anderen bevorzugten Variante werden als lipophile Stoffe Mineralöle und/oder Altöle verwendet. Es ist aber auch möglich, z.B. verbrauchte Bohremulsionen, wasserunlösliche Lösungsmittel oder bituminöse Rückstände als lipophile Stoffe dem Klärschlamm zuzusetzen. Durch den Zusatz der lipophilen Stoffe zum Klärschlamm entsteht ein Adsorbens, das ganz überraschende Eigenschaften aufweist. Die halogenierten organischen Verbindungen werden hervorragen gebunden, wobei nur geringe Kontaktzeiten für den Kontakt zwischen dem Adsorbens und dem Abwasser erforderlich sind. Offenbar bewirkt der Zusatz der lipophilen Stoffe eine Beschleunigung des Stoffübergangs von dem halogenierten organischen Verbindungen enthaltenden Abwasser zum Klärschlamm.

In einer Weiterbildung des Erfindungsgedankens werden dem Klärschlamm zusätzlich Braunkohlenkoks und/oder Tierkohle und/oder Steinkohlenstaub und/oder Sägemehl und/oder Aschen- und/oder Bentonite zugesetzt. Auf diese Weise werden die Adsorptionseigenschaften weiter verbessert.

Der mit den lipophilen Stoffen und gegebenenfalls den genannten Zusatzstoffen präparierte Klärschlamm wird vorzugsweise in einem Rührkessel mit dem Abwasser in Kontakt gebracht. Dabei reicht in der Regel eine Kontakt zeit von ca. 0,01 bis 2 Stundenaus, um die halogenierten organischen Verbindungen weitgehend an den Klärschlamm zu binden. In einer anderen Ausführungsform der Erfindung wird der entsprechend präparierte Klärschlamm in einem Fest- oder Wirbelbettreaktor mit dem Abwasser in Kontakt gebracht. In diesem Fall ist eine Kontaktzeit von ca. 0,1 bis ca. 10 Stunden erforderlich, um die halogenierten organischen Verbindungen weitgehend aus dem Abwasser zu entfernen. Eine besonders bevorzugte Ausführungsform sieht vor, den präparierten Klärschlamm in einem aufwärts durchströmten Schlammbettreaktor mit dem Abwasser in Kontakt zu bringen. Das vom Abwasser durchströmte Schlammbett bewirkt zusätzlich eine Filtration des Abwassers. Insbesondere kolloidgebundene halogenierte organische Verbindungen können auf diese Weise erfolgreich aus dem Abwasser entfernt werden.

Der mir den halogenierten organischen Verbindungen beladene Klärschlamm wird vorzugsweise in Schwerkraftabscheidern vom gereinigten Abwasser abgetrennt. Es können aber auch Dekanter, Zentrifugen, Flotations- oder Filtrationseinheiten zum Zurückhalten des beladenen Klärschlamms verwendet werden. jur Erreichung einer besonders vollständigen Abtrennung des beladenen Klärschlamms vom gereinigten Abwasser ist die Anwendung einer Feinstfiltration bzw. Membranfiltration, z.B. Querstrommikrofiltration, empfehlenswert.

Das erfindungsgemäße Verfahren arbeitet äußerst wirtschaftlich, da einerseits das verwendete Adsorbens sehr billig ist und andererseits aufgrund einer einfachen Anlagenkonzeption niedrige Investitionskosten entstehen. Für das Adsorbens, bestehend aus dem Klärschlamm, der in biologischen Kläranlagen als Abfallprodukt anfällt, und den Zusatzstoffen, die äußerst billig sind bzw. ebenfalls als Abfallprodukte anfallen (z.B. Altöl), sind lediglich Kosten in Höhe von DM 50,-- bis DM 300,--/t zu veranschlagen. Außerdem ist keine Regeneration des Adsorbens nötig, was sich ebenfalls positiv auf die Kostenrechnung auswirkt.

Das Verfahren eignet sich zur Reinigung aller denkbaren Abwässer, die halogenierte organische Verbindungen enthalten, insbesondere zur Reinigung von Industrieabwässern aus der metallverarbeitenden und chemischen Industrie.

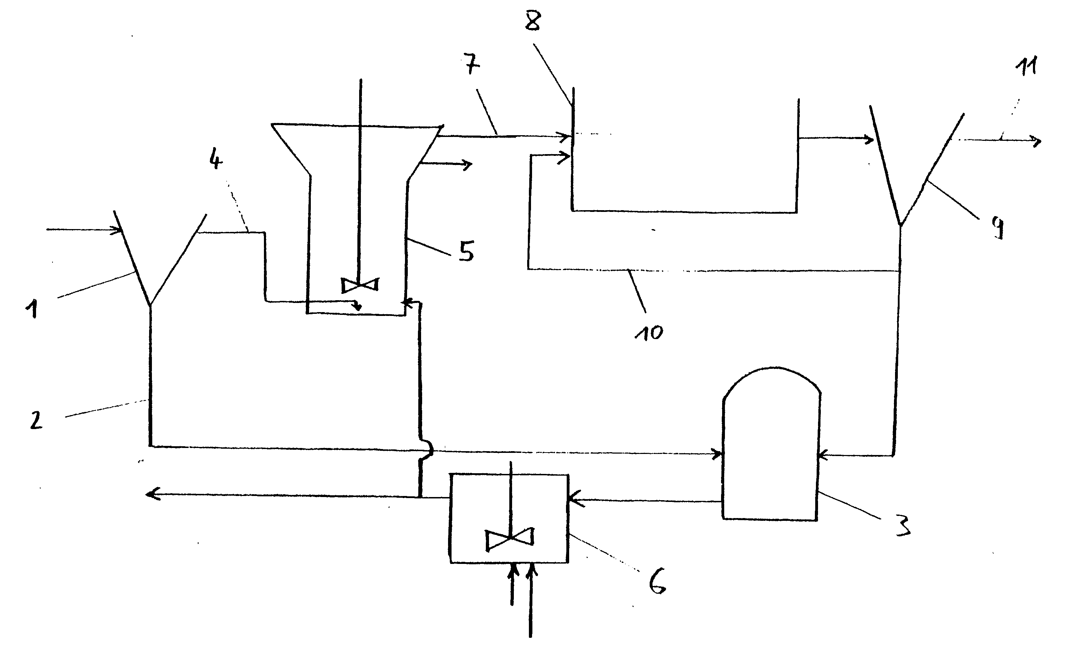

Im folgenden sei die Erfindung anhand eines in der Zeichnung schematisch dargestellten Ausführungsbeispiels näher erläutert:

Die Figur zeigt eine biologische Kläranlage mit vorgeschalteter Elimination der halogenierten organischen Verbindungen.

Das halogenierte organische Verbindungen enthaltende Abwasser einer metallverarbeitenden Industrie wird zunächst einem Vorklärbecken 1 zur Entfernung von sedimentierbaren Feststoffen zugeführt. Die Feststoffe werden über Leitung einem Faulturm 3 zugeleitet. Das Abwasser wird über Leitung 2 einem aufwärts durchströmten Schlammbettreaktor 5 zugeführt,wo es mit Klärschlamm vermischt wird, der mit einem lipophilen Stoff versetzt ist. Das Abwasser wird im Reaktor mit dem Klärschlamm in Kontakt gehalten. Der Klärschlamm entstammt dem Faulturm 3 und wird in einer nachgeschalteten Mischeinheit 6 mit dem lipophilen Stoff versetzt. Als lipophiler Stoff wird Altöl verwendet, der mit dem Klärschlamm vermischt wird. Außerdem wird Sägemehl dem Klärschlamm zugegeben, um die Adsorptionseigenschaften noch zu verbessern. Im oberen Teil des Reaktors 5 bildet sich ein Schlammbett aus, das vom Abwasser von unten nach oben durchströmt wird. Das Schlammbett wirkt zusätzlich als Filter, insbesondere zur Zurückhaltung kolloidgebundener halogenierter organischer Verbindungen. Während das gereinigte Abwasser über Leitung 7 aus dem Reaktor 5 abgezogen und einem herkömmlichen biologischen Belebungsbecken 8 zum BSB-Abbau zugeführt wird, wird der mit den halogenierten organischen Verbindungen beladene Klärschlamm über Leitung 9 abgeführt und einem nichtdargestellten Verbrennungsofen zugeleitet. Dem Belebungsbecken 8 ist ein Nachklärbecken 9 nachgeschaltet. Rücklaufschlamm wird über Leitung 10 zum Belebungsbecken 8 zurückgeleitet, während Überschußschlamm dem Faulturm 3 zugeführt wird. Gereinigtes Abwasser wird über Leitung 11 abgezogen.

**Ansprüche**

1. Verfahren zur Entfernung von halogenierten organischen Verbindungen aus Abwasser, dadurch gekennzeichnet, daß das Abwasser mit Klärschlamm in Kontakt gebracht wird, der mit mindestens einem lipophilen Stoff versetzt ist, und anschließend der Klärschlamm vom gereinigten Abwasser abgetrennt wird.

2. Verfahren nach Anspruch 1, dadurch gekennzeichnet, daß als Klärschlamm aerob stabilisierter Überschußschlamm und/oder Faulschlamm aus einer Kläranlage verwendet wird.

3. Verfahren nach Anspruch 1 oder 2, dadurch gekennzeichnet, daß als lipophile Stoffe pflanzliche und/oder tierische Fette bzw. Öle verwendet werden.

4. Verfahren nach einem der Ansprüche 1 bis 3,dadurch gekennzeichnet, daß als lipophile Stoffe Mineralöle und/oder Altöle verwendet werden.

5. Verfahren nach einem der Ansprüche 1 bis 4,dadurch gekennzeichnet, daß dem Klärschlamm Braunkohlenkoks und/oder Tierkohle und/oder Steinkohlenstaub und/oder Sägemehl und/oder Aschen und/oder Bentonite zugesetzt werden.

6. Verfahren nach einem der Ansprüche 1 bis 5, dadurch gekennzeichnet, daß das Abwasser mit dem Klärschlamm in einem Rührkessel während einer Zeit von ca. 0,01 bis ca. 2 Stunden in Kontakt gehalten wird.

7. Verfahren nach einem der Ansprüche 1 bis 5, dadurch gekennzeichnet, daß das Abwasser mit dem Klärschlamm in einem Fest- oder Wirbelbettreaktor während einer Zeit von ca. 0,1 bis ca. 10 Stunden in Kontakt gehalten wird.

8. Verfahren nach einem der Ansprüche 1 bis 5, dadurch gekennzeichnet, daß das Abwasser mit dem Klärschlamm in einem aufwärts durchströmten Schlammbettreaktor in Kontakt gebracht wird.

9. Verfahren nach einem der Ansprüche 1 bis 8, dadurch gekennzeichnet, daß der vom gereinigten Abwasser abgetrennte Klärschlamm verbrannt oder deponiert wird.